# EUROPEAN PATENT APPLICATION

(11) **EP 3 779 001 A1**
(43) Date of publication of application: **17.02.2021**
(21) Application number: 19777894.7
(22) Date of filing: 22.03.2019
(51) Int. Cl.: D01F 9/08

(54) **METHOD FOR PRODUCING METAL OXIDE FIBERS, AND METAL OXIDE FIBERS**

(30) Priority: 29.03.2018 JP 2018064028; 29.03.2018 JP 2018064029
(71) Applicant: Toray Industries, Inc., Tokyo, 103-8666 (JP)
(72) Inventor: KAMOGAWA, Masao, Otsu-shi, Shiga 520-8558 (JP); SUWA, Mitsuhito, Otsu-shi, Shiga 520-8558 (JP); NARUTO, Masayuki, Otsu-shi, Shiga 520-8558 (JP)
(74) Representative: Hoefer & Partner Patentanwälte mbB
(86) International application number: PCT/JP2019/012225
(87) International publication number: WO 2019/188834

(57) **Abstract**

In one aspect of the present invention, provided is a method of producing a metal oxide fiber, including a spinning step of spinning a composition containing polymetalloxane and an organic solvent to obtain a thread-like product; and a firing step of firing the thread-like product obtained in the spinning step at a temperature of 200°C or higher and 2,000°C or lower to obtain a metal oxide fiber. The polymetalloxane has a repeating structure composed of a metal atom selected from the group consisting of Al, Sc, Ti, V, Cr, Mn, Fe, Co, Ni, Cu, Zn, Ga, Ge, Y, Zr, Nb, Mo, Pd, Ag, In, Sn, Sb, Hf, Ta, W and Bi, and an oxygen atom. The weight average molecular weight of the polymetalloxane is 20,000 or more and 2,000,000 or less.

## Description

### Technical Field

The present invention relates to a method of producing metal oxide fibers and metal oxide fibers.

### Background Art

Fibers made of a metal oxide (hereinafter may be referred to as "metal oxide fibers") have properties such as high heat resistance, high strength, and surface activity, and are expected to have properties useful for various applications. For example, fibers mainly composed of alumina (Al₂O₃) as a metal oxide show excellent heat resistance, as well as high strength and high modulus, and thus are used as heat-insulating materials for high temperature and as reinforcing fibers such as for metals, ceramics, and plastics. A metal oxide fiber containing zirconia (ZrO2) has been proposed as a fiber with greater strength (see, for example, Patent Literature 1). In addition, fibers mainly composed of titania (TiO2), which can impart high heat resistance and high strength, as well as photocatalytic properties, are expected to be used for environmental purification, such as decomposition of volatile organic compounds (see, for example, patent document 2).

A known method of producing such a metal oxide fiber is a melt spinning method. This method is as described below. For example, a metal oxide material and a low-melting compound such as silica are mixed. Next, the mixture is fused in a high-temperature furnace and removed as a fused product stream. This thin stream is exposed to spraying of a high-pressure air or application of a centrifugal force to be rapidly cooled, giving a metal oxide fiber (see, for example, Patent Literature 3).

As another melt spinning method, a technology has been known comprising adding an alkali metal or an alkaline earth metal as a raw material and allowing for melting at lower temperature, thereby enabling fiber formation (see, for example,

Patent Literature 4).

A general method for obtaining a high-concentration metal oxide fiber has been known, comprising preparing a fibrous precursor using a spinning solution containing a metal oxide source and a thickener, and heating it to remove organic compounds (see, for example, Patent Literature 5).

### Citation List

### Patent Literature

[Patent Literature 1] JP 9-291421 A
[Patent Literature 2] JP 9-276705 A
[Patent Literature 3] JP 2000-45127 A
[Patent Literature 4] JP 60-46927 A
[Patent Literature 5] JP 9-316733 A

### Summary of Invention

### Technical Problem

However, since higher concentration of a metal oxide material will lead to higher fusion temperature, it may be difficult for such a melt spinning method as described in Patent Literature 3 to provide a high-concentration metal oxide fiber. Such a melt spinning method as described in Patent Literature 4 may result in poor degree of crosslinking, providing a fiber that is more easily broken and has poor strength.

The technology described in Patent Literature 5 relates to a method of producing an alumina fiber comprising mixing an alumina source such as aluminum oxychloride or aluminum lactate, and silica sol for inhibition of grain growth, and further adding polyethylene glycol and polyethylene oxide as thickeners to obtain a viscous liquid; spinning it; and heating the obtained fibrous precursor. However, such a method may result in lower heat resistance of the fiber due to the silica component. In addition, holes and cracks may be produced when the thickener is lost due to firing during the firing process, which may lead to poor strength. Furthermore, aluminum oxychloride, when used as a raw material, may produce a chlorine gas during a heating process, which may erode heating furnace and ducts.

In light of the above problems, an object of the present invention is to provide a method of producing a dense metal oxide fiber without need of an additive for inhibition of grain growth (hereinafter, referred to as "grain growth inhibitor") or a thickener, as well as a metal oxide fiber.

### Solution to Problem

In order to solve the above-described problems and achieve the object, the present invention provides a method of producing a metal oxide fiber, comprising: a spinning step of spinning a composition containing polymetalloxane and an organic solvent to obtain a thread-like product; and a firing step of firing the thread-like product obtained in the spinning step at a temperature of 200°C or higher and 2,000°C or lower to obtain a metal oxide fiber; wherein the polymetalloxane has a repeating structure composed of a metal atom selected from the group consisting of Al, Sc, Ti, V, Cr, Mn, Fe, Co, Ni, Cu, Zn, Ga, Ge, Y, Zr, Nb, Mo, Pd, Ag, In, Sn, Sb, Hf, Ta, W, and Bi, and an oxygen atom; wherein the weight average molecular weight of the polymetalloxane is 20,000 or more and 2,000,000 or less.

The present invention provides a method of producing a metal oxide fiber according to the above-described present invention, wherein the viscosity of the composition at 25°C is 10 P or more and 50,000 P or less.

The present invention provides a method of producing a metal oxide fiber according to the above-described present invention, characterized in that the average fiber diameter is 0.01 µm or more and 1,000 µm or less.

The present invention provides a method of producing a metal oxide fiber according to the above-described present invention, characterized in that the composition contains an organic polymer; and wherein the content of the organic polymer in the composition is 1% by weight or less relative to the weight of the polymetalloxane contained in the composition.

The present invention provides a method of producing a metal oxide fiber according to the above-described present invention, characterized in that the composition does not contain any of an alkali metal and an alkaline earth metal.

The present invention provides a method of producing a metal oxide fiber according to the above-described present invention, characterized in that the composition does not contain any of silicic acid, a silicate salt, silica gel, a silicate ester, boric acid, a borate salt, and a borate ester.

The present invention provides a method of producing a metal oxide fiber according to the above-described present invention, characterized in that the polymetalloxane has at least one of a structural unit represented by the following general formula (1) and a structural unit represented by the following general formula (2): 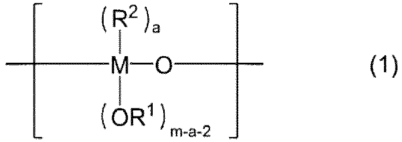 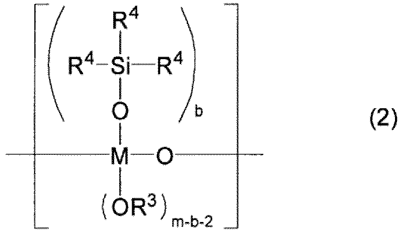 wherein in the general formula (1) and the general formula (2),
R¹ and R³ are arbitrarily selected from a hydrogen atom, an alkyl group having 1 to 12 carbon atoms, or a group having a metalloxane bond;
R² is arbitrarily selected from a hydroxy group, an alkyl group having 1 to 12 carbon atoms, an alicyclic alkyl group having 5 to 12 carbon atoms, an alkoxy group having 1 to 12 carbon atoms, an aromatic group having 6 to 30 carbon atoms, a phenoxy group having 6 to 30 carbon atoms, and a naphthoxy group having 10 to 30 carbon atoms;
when a plurality of R¹, R², and R³ exist, they are optionally the same or different;
R⁴ is arbitrarily selected from a hydroxy group, an alkyl group having 1 to 12 carbon atoms, an alicyclic alkyl group having 5 to 12 carbon atoms, an alkoxy group having 1 to 12 carbon atoms, an aromatic group having 6 to 30 carbon atoms, and a group having a siloxane bond;
M represents a metal atom selected from the group consisting of Al, Sc, Ti, V, Cr, Mn, Fe, Co, Ni, Cu, Zn, Ga, Ge, Y, Zr, Nb, Mo, Pd, Ag, In, Sn, Sb, Hf, Ta, W, and Bi;
m is an integer indicating the valence of the metal atom M;
a is an integer of 0 to (m-2); and
b is an integer of 1 to (m-2).

The present invention provides a method of producing a metal oxide fiber according to the above-described present invention, characterized in that the polymetalloxane has at least a structural unit represented by the general formula (1); and wherein at least one of R² in the general formula (1) is a hydroxy group.

The present invention provides a method of producing a metal oxide fiber according to the above-described present invention, characterized in that the polymetalloxane has at least a structural unit represented by the general formula (2).

The present invention provides a method of producing a metal oxide fiber according to the above-described present invention, characterized in that the metal atom M in the polymetalloxane comprises at least one metal atoms selected from the group consisting of Al, Ti, Zr, and Sn.

The present invention provides a method of producing a metal oxide fiber according to the above-described present invention, characterized in that the metal atom M in the polymetalloxane comprises Ti; and wherein the ratio of Ti in the entire metal atom M in the metal oxide fiber is in a range of 5 mol% or more and 100 mol% or less.

The present invention provides a method of producing a metal oxide fiber according to the above-described present invention, wherein the metal atom M in the polymetalloxane comprises Zr; and wherein the ratio of Zr in the entire metal atom M in the metal oxide fiber is in a range of 5 mol% or more and 100 mol% or less.

The present invention provides a method of producing a metal oxide fiber according to the above-described present invention, wherein the spinning step is a step of spinning the composition by a dry spinning method or an electro-spinning method.

The present invention provides a metal oxide fiber, comprising Si, and at least one metal atom selected from the group consisting of Al, Sc, Ti, V, Cr, Mn, Fe, Co, Ni, Cu, Zn, Ga, Ge, Y, Zr, Nb, Mo, Pd, Ag, In, Sn, Sb, Hf, Ta, W, and Bi; wherein the content of the SiO₂ component in the metal oxide is 0.5% by weight or less.

The present invention provides a metal oxide fiber according to the above-described present invention, characterized in that the average fiber diameter is 0.01 µm or more and 1,000 µm or less.

The present invention provides a metal oxide fiber according to the above-described present invention, characterized in that the metal atom in the metal oxide comprises at least one metal atom selected from the group consisting of Al, Ti, Zr, and Sn.

The present invention provides a metal oxide fiber according to the above-described present invention, characterized in that the metal atom in the metal oxide comprises Ti; and wherein the ratio of Ti in the entire contained metal atom is in a range of 5 mol% or more and 100 mol% or less.

The present invention provides a metal oxide fiber according to the above-described present invention, characterized in that the metal atom in the metal oxide comprises Zr; and wherein the ratio of Zr in the entire contained metal atom is in a range of 5 mol% or more and 100 mol% or less.

The present invention provides a metal oxide fiber according to the fourteenth or fifteenth aspect, characterized in that the metal atom in the metal oxide comprises two or more metal atoms selected from the group consisting of Al, Ti, Zr, and Sn.

### Advantageous Effects of Invention

The present invention employs a high-molecular weight polymetalloxane as a raw material and thus does not require a grain growth inhibitor or a thickener, so that a dense metal oxide fiber can be obtained. Thus, a metal oxide fiber showing properties such as high heat resistance, high strength, and surface activity can be readily obtained. Furthermore, since the content of SiO₂ components, such as silica, which can cause a decrease in heat resistance is 0.5% by weight or less, the present invention can provide a metal oxide fiber having high heat resistance.

### Description of Embodiments

Embodiments of the method of producing a metal oxide fiber and the metal oxide fiber according to the present invention will now be described in detail. However, the present invention is not limited to the following embodiments and can be performed with various modification based on the purpose or application.

### [Embodiment 1]

In Embodiment 1 of the present invention, the method of producing a metal oxide fiber comprises a spinning step of spinning a composition containing polymetalloxane and an organic solvent to obtain a thread-like product; and a firing step of firing the thread-like product obtained in the spinning step at a temperature of 200°C or higher and 2,000°C or lower to obtain a metal oxide fiber. In the method of producing a metal oxide fiber, the polymetalloxane has a repeating structure composed of a metal atom selected from the group consisting of Al, Sc, Ti, V, Cr, Mn, Fe, Co, Ni, Cu, Zn, Ga, Ge, Y, Zr, Nb, Mo, Pd, Ag, In, Sn, Sb, Hf, Ta, W, and Bi, and an oxygen atom. The weight average molecular weight of the polymetalloxane is 20,000 or more and 2,000,000 or less. Hereinafter, the polymetalloxane and the organic solvent in the present invention may be referred to as polymetalloxane (a) and organic solvent (b), respectively.

### (Polymetalloxane (a))

In general, polymetalloxane is a polymer having a metal-oxygen-metal bond as its backbone. The metal atom constituting polymetalloxane (a) in the present invention is selected from the group consisting of Al, Sc, Ti, V, Cr, Mn, Fe, Co, Ni, Cu, Zn, Ga, Ge, Y, Zr, Nb, Mo, Pd, Ag, In, Sn, Sb, Hf, Ta, W, and Bi. When Polymetalloxane (a) comprises the metal atom described above, a metal oxide fiber having high heat resistance can be obtained. Preferably, the metal atom is a metal atom selected from the group consisting of Al, Ti, Zr, and Sn. Specifically, the metal atom in polymetalloxane (a) preferably comprises at least one metal atoms selected from the group consisting of Al, Ti, Zr, and Sn. When polymetalloxane (a) comprises the above-described preferred metal atom, a metal alkoxide used as a raw material for synthesizing polymetalloxane described later stably exists, so that a high-molecular weight polymetalloxane can be easily obtained.

The lower limit of the weight average molecular weight of polymetalloxane (a) is preferably 20,000 or more, more preferably 50,000 or more, still more preferably 200,000 or more. The upper limit of the weight average molecular weight of polymetalloxane (a) is preferably 2,000,000 or less, more preferably 1,500,000 or less, still more preferably 1,000,000 or less. When the weight average molecular weight of polymetalloxane (a) is within the above-described range, the polymetalloxane solution exhibits spinnability and thus has good processability into a thread-like product in the spinning step described later. When the weight average molecular weight of polymetalloxane (a) is the lower limit or more, the thread-like product has increased crack resistance, so that a homogeneous metal oxide fiber without crack can also be obtained in the firing step described later.

The weight average molecular weight in the present invention means a value in terms of polystyrene measured by gel permeation chromatography (GPC). The weight average molecular weight of polymetalloxane (a) can be determined by the following method. For example, polymetalloxane (a) is dissolved in an eluent such that the concentration become 0.2% by weight to prepare a sample solution. Subsequently, the sample solution is poured into a column packed with a porous gel and an eluent. The column eluate is detected by a differential refractive index detector and the elution time is analyzed to determine the weight average molecular weight. The eluent to be selected is one that can dissolve polymetalloxane (a) to a concentration of 0.2% by weight. When polymetalloxane (a) is dissolved in a solution of 0.02 mol/dm³ lithium chloride and N-methyl-2-pyrrolidone, this solution is used as the eluent.

There is no particular limitation on the structural unit in polymetalloxane (a), and polymetalloxane (a) preferably has at least one of a structural unit represented by the following general formula (1) and a structural unit represented by the following general formula (2).

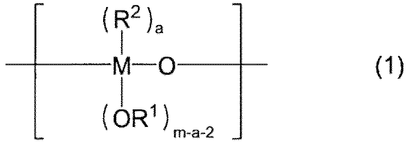

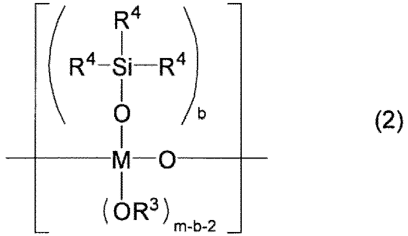

In the general formula (1) and the general formula (2), R¹ and R³ are arbitrarily selected from a hydrogen atom, an alkyl group having 1 to 12 carbon atoms, or a group having a metalloxane bond. R² is arbitrarily selected from a hydroxy group, an alkyl group having 1 to 12 carbon atoms, an alicyclic alkyl group having 5 to 12 carbon atoms, an alkoxy group having 1 to 12 carbon atoms, an aromatic group having 6 to 30 carbon atoms, a phenoxy group having 6 to 30 carbon atoms, and a naphthoxy group having 10 to 30 carbon atoms. When a plurality of R¹, R², and R³ exist, they are optionally the same or different. R⁴ is arbitrarily selected from a hydroxy group, an alkyl group having 1 to 12 carbon atoms, an alicyclic alkyl group having 5 to 12 carbon atoms, an alkoxy group having 1 to 12 carbon atoms, an aromatic group having 6 to 30 carbon atoms, and a group having a siloxane bond. M represents a metal atom selected from the group consisting of Al, Sc, Ti, V, Cr, Mn, Fe, Co, Ni, Cu, Zn, Ga, Ge, Y, Zr, Nb, Mo, Pd, Ag, In, Sn, Sb, Hf, Ta, W, and Bi. m is an integer indicating the valence of the metal atom M. a is an integer of 0 to (m-2). b is an integer of 1 to (m-2).

Examples of the alkyl group having 1 to 12 carbon atoms include a methyl group, an ethyl group, a propyl group, an isopropyl group, a butyl group, an isobutyl group, a s-butyl group, a t-butyl group, a pentyl group, a hexyl group, a heptyl group, an octyl group, a 2-ethylhexyl group, a nonyl group, a decyl group, a undecyl group, and a dodecyl group.

Examples of the alicyclic alkyl group having 5 to 12 carbon atoms include a cyclopentyl group, a cyclohexyl group, a cycloheptyl group, a cyclooctyl group, a cyclononyl group, and a cyclodecyl group.

Examples of the alkoxy group having 1 to 12 carbon atoms include a methoxy group, an ethoxy group, a propoxy group, an isopropoxy group, a butoxy group, an isobutoxy group, an s-butoxy group, a t-butoxy group, a pentoxy group, a hexyloxy group, a heptoxy group, an octoxy group, a 2-ethylhexylixy group, a nonyl group, and a decyloxy group.

Examples of the aromatic group having 6 to 30 carbon atoms include a phenyl group, a phenoxy group, a benzyl group, a phenylethyl group, and a naphthyl group.

Examples of the phenoxy group having 6 to 30 carbon atoms include a phenoxy group, a methylphenoxy group, an ethylphenoxy group, a propylphenoxy group, a methoxyphenoxy group, an ethoxyphenoxy group, and a propoxyphenoxy group.

Examples of the naphthoxy group having 10 to 30 carbon atoms include a naphthoxy group, a methylnaphthoxy group, an ethylnaphthoxy group, a propylnaphthoxy group, a methoxynaphthoxy group, an ethoxynaphthoxy group, and a propoxynaphthoxy group.

The case where R¹ and R³ are groups having a metalloxane bond means that R¹ and R³ are bound to another polymetalloxane molecule via an oxygen atom.

When polymetalloxane (a) has at least one of the structural unit represented by a general formula (1) and a structural unit represented by the general formula (2), the compatibility of polymetalloxane (a) with other components is improved. Thus, polymerization without precipitation can be made during polymetalloxane synthesis described later, so that polymetalloxane (a) having a weight average molecular weight of 20,000 or more and 2,000,000 or less can be easily obtained.

Preferably, polymetalloxane (a) has at least a structural unit represented by the general formula (1) and at least one of R² in the general formula (1) is a hydroxy group. Inclusion of the hydroxyl group in polymetalloxane (a) as described above enables formation of a polymetalloxane excellent in storage stability with a small increase in viscosity even during long-term storage.

The case where R⁴ in the general formula (2) is a group having a siloxane bond means that R⁴ is bound to another Si via an oxygen atom.

Preferably, polymetalloxane (a) has at least a structural unit represented by the general formula (2). Polymetalloxane (a) having a structural unit represented by the general formula (2) has an (R⁴₃SiO-) group, thereby having significantly improved compatibility with other components. Therefore, polymetalloxane (a) stably exists in an organic solvent. Furthermore, during the firing step for forming a metal oxide fiber described later, the (R⁴₃SiO-) group contained in polymetalloxane (a) allows for release of condensation stress of polymetalloxane (a), so that a homogeneous metal oxide fiber that is less likely to produce cracks can be obtained.

Particularly preferably, polymetalloxane (a) has a structural unit represented by the general formula (1) and a structural unit represented by the general formula (2).

Examples of the (R⁴₃SiO-) group in the general formula (2) include a trihydroxysiloxy group, a trimethylsiloxy group, a triethylsiloxy group, a tripropylsiloxy group, a triisopropylsiloxy group, a tributylsiloxy group, a triisobutylsiloxy group, a tri-s-butylsiloxy group, a tri-t-butylsiloxy group, a tricyclohexylsiloxy group, a trimethoxysiloxy group, a triethoxysiloxy group, a tripropoxysiloxy group, a triisopropoxysiloxy group, a tributoxysiloxy group, a triphenylsiloxy group, a hydroxydiphenylsiloxy group, a methyldiphenylsiloxy group, an ethyldiphenylsiloxy group, a propyldiphenylsiloxy group, a dihydroxy(phenyl)siloxy group, a dimethyl(phenyl)siloxy group, a diethyl(phenyl)siloxy group, a dipropyl(phenyl)siloxy group, a trinaphthylsiloxy group, a hydroxydinaphthylsiloxy group, a methyldinaphthylsiloxy group, an ethyldinaphthylsiloxy group, a propyldinaphthylsiloxy group, a dihydroxy(naphthyl)siloxy group, a dimethyl(naphthyl)siloxy group, a diethyl(naphthyl)siloxy group, and a dipropyl(naphthyl)siloxy group.

From the viewpoint of the heat resistance of polymetalloxane (a), R⁴ is preferably an alkyl group having 1 to 4 carbon atoms or a phenyl group. Specific examples of the alkyl group having 1 to 4 carbon atoms include a methyl group, an ethyl group, a propyl group, an isopropyl group, a butyl group, an isobutyl group, and a t-butyl group. Thus, preferred examples of the (R⁴₃SiO-) group include a trimethylsiloxy group, a triethylsiloxy group, a tripropylsiloxy group, a triisopropylsiloxy group, a tributylsiloxy group, a triisobutylsiloxy group, a tri-s-butylsiloxy group, a tri-t-butylsiloxy group, a methyldiphenylsiloxy group, an ethyldiphenylsiloxy group, a propyldiphenylsiloxy group, a dihydroxy(phenyl)siloxy group, a dimethyl(phenyl)siloxy group, a diethyl(phenyl)siloxy group, and a dipropyl(phenyl)siloxy group.

The content of the (R⁴₃SiO-) group, when represented by the ratio of the number of moles of Si (silicon atoms) to the number of moles of the metal atom M in polymetalloxane (a), is preferably 1 mol% or more and 250 mol% or less, and more preferably 10 mol% or more and 200 mol% or less. When the content of the (R⁴₃SiO-) group is within the above-described range, the compatibility of polymetalloxane (a) with other components is further improved. Therefore, the polymetalloxane (a) particularly stably exists in organic solvents.

Preferably, the metal atom M in the general formula (1) and the general formula (2), i.e., the metal atom M in polymetalloxane (a) comprises at least one metal atoms selected from the group consisting of Al, Ti, Zr, and Sn. This allows a metal alkoxide used as a raw material for synthesizing polymetalloxane (a) to stably exist, so that a high-molecular weight polymetalloxane (a) can be easily obtained.

Preferably, the metal atom M in polymetalloxane (a) comprises Ti (titanium atom), and the ratio of Ti in the entire metal atom M in the metal oxide fiber is in a range of 5 mol% or more and 100 mol% or less. When the ratio of Ti is within the above-described range, crystals of titanium dioxide are produced in the metal oxide fiber. This allows for impartment of photocatalytic properties that are unique to titanium dioxide to the metal oxide fiber.

Preferably, the metal atom M in polymetalloxane (a) comprises Zr (zirconium atom), and the ratio of Zr in the entire metal atom M in the metal oxide fiber is in a range of 5 mol% or more and 100 mol% or less. When the ratio of Zr is within the above-described range, crystals of zirconium dioxide are produced in the metal oxide fiber. Since the melting point of zirconium dioxide is as high as 2715°C, a metal oxide fiber with excellent heat resistance can be obtained.

### (Method of Synthesizing Polymetalloxane (a))

There is no particular limitation on the method of synthesizing polymetalloxane (a) in the present invention, and preferably comprises a polycondensation step comprising hydrolyzation, as necessary, of at least one of a compound represented by the following general formula (3) and a compound represented by the following general formula (4), followed by partial condensation and polymerization.

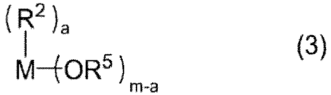

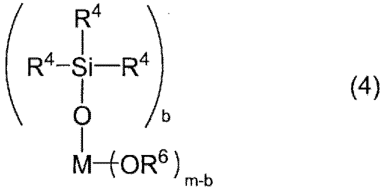

In the general formula (3) and the general formula (4), R⁵ is the same as R¹ in the general formula (1) described above, and R⁶ is the same as R³ in the general formula (2) described above.

In the present invention, the partial condensation means not to condense all M-OH in the hydrolysate, but to leave some M-OH of the all M-OH in the resultant polymetalloxane (a). Under the general condensation conditions as mentioned later, some M-OH generally remain in polymetalloxane (a). The amount of remaining M-OH is not particularly limited.

There is no particular limitation on the compound represented by the general formula (3), examples of which include metal alkoxides described in WO2017/90512.

There is no particular limitation on the compound represented by the general formula (4), examples of which include compounds illustrated as the compound represented by the general formula (2) in the same document. Among the illustrated compounds, tripropoxy(trimethylsiloxy)titanium, triisopropoxy(trimethylsiloxy)titanium, tributoxy(trimethylsiloxy)titanium, tripropoxy(trimethylsiloxy)zirconium, triisopropoxy(trimethylsiloxy)zirconium, tributoxy(trimethylsiloxy)zirconium, dipropoxy(trimethylsiloxy)aluminum, diisopropoxy(trimethylsiloxy)aluminum, dibutoxy(trimethylsiloxy)aluminum, and di-s-butoxy(trimethylsiloxy)aluminum are particularly preferred used as the compound represented by the general formula (4).

A general method can be used for hydrolysis, partial condensation, and polymerization of the compounds described above. For example, the reaction conditions for the hydrolysis are preferably such that water is added to the metal alkoxide over 1 to 180 minutes in a solvent, and then the mixture is allowed to react at room temperature to 110°C for 1 to 180 minutes. By performing the hydrolysis reaction under such conditions, rapid hydrolysis reaction can be prevented. The temperature in the hydrolysis reaction is preferably 30°C to 150°C. A catalyst may be optionally added during hydrolysis.

As preferred reaction conditions for partial condensation and polymerization, a hydrolysate is obtained by a hydrolysis reaction of the metal alkoxide, and then the reaction solution is directly heated at 50°C to 180°C for 1 to 100 hours. To increase the degree of polymerization of polymetalloxane (a), reheating or addition of a catalyst may be performed. After the hydrolysis reaction, an appropriate amount of the thus produced alcohol or the like may be, as necessary, evaporated and removed by at least one of heat and reduced pressure, and then an optional solvent may be added.

The solvent is not particularly limited, and compounds having an alcoholic hydroxy group (i.e., alcohol-based solvents), esters, ethers, and ketones are preferably used. When these solvents are used, the stability of polymetalloxane (a) can be improved.

Examples of the alcohol-based solvents include methanol, ethanol, n-propanol, isopropanol, n-butanol, isobutanol, t-butanol, acetol, 3-hydroxy-3-methyl-2-butanone, 5-hydroxy-2-pentanone, 4-hydroxy-4-methyl-2-pentanone (diacetone alcohol), ethyl lactate, butyl lactate, propylene glycol monomethyl ether, propylene glycol monoethyl ether, propylene glycol mono-n-propyl ether, propylene glycol mono-n-butyl ether, propylene glycol mono-t-butyl ether, diethylene glycol monomethyl ether, diethylene glycol monoethyl ether, dipropylene glycol monomethyl ether, 3-methoxy-1-butanol, 3-methyl-3-methoxy-1-butanol, ethylene glycol, propylene glycol, dipropylene glycol mono-n-butyl ether, and tripropylene glycol mono-n-butyl ether.

Examples of the ester-based solvents include ethyl acetate, n-propyl acetate, isopropyl acetate, n-butyl acetate, isobutyl acetate, propylene glycol monomethyl ether acetate, 3-methoxy-1-butyl acetate, 3-methyl-3-methoxy-1-butyl acetate, ethyl acetoacetate, and cyclohexanol acetate.

Examples of ether-based solvents include diethyl ether, diisopropyl ether, din-butyl ether, diphenyl ether, diethylene glycol ethyl methyl ether, diethylene glycol dimethyl ether, 1,2-dimethoxyethane, 1,2-diethoxyethane, and dipropylene glycol dimethyl ether.

Examples of the ketone-based solvents include methyl isobutyl ketone, diisopropyl ketone, diisobutyl ketone, acetylacetone, cyclopentanone, cyclohexanone, cycloheptanone, and dicyclohexyl ketone.

Examples of other solvents that can be preferably used include propylene carbonate and N-methylpyrrolidone.

By adjusting the amount of water added in the hydrolysis reaction, it is possible to adjust the degree of hydrolysis of at least one of the compound represented by the general formula (3) and the compound represented by the general formula (4). The amount of water added is preferably 0.1 mol or more and 2 mol or less based on 1 mol of the alkoxy group.

There is no particular limitation on the catalyst to be optionally added, and an acidic catalyst or a basic catalyst is preferably used. Specific examples of the acidic catalyst include hydrochloric acid, nitric acid, sulfuric acid, hydrofluoric acid, phosphoric acid, acetic acid, trifluoroacetic acid, formic acid, polyvalent carboxylic acid or an anhydride thereof, and an ion exchange resin. Specific examples of the basic catalyst include triethylamine, tripropylamine, tributylamine, tripentylamine, trihexylamine, triheptylamine, trioctylamine, diethylamine, dipropylamine, dibutylamine, diisobutylamine, dipentylamine, dihexylamine, diheptylamine, dioctylamine, triethanolamine, diethanolamine, dicyclohexylamine, dicyclohexylmethylamine, 2,6-lutidine, 2,2,4,4-tetramethylpiperidine, 2,2,4,4-tetramethylpiperidone, alkoxy silane having an amino group, and an ion exchange resin.

Among these, more preferred are the basic catalysts. By using the basic catalysts, particularly high molecular weight polymetalloxane (a) can be obtained. Among the basic catalysts, tripropylamine, triisobutylamine, tripentylamine, triisopentylamine, trihexylamine, triheptylamine, trioctylamine, dibutylamine, diisobutylamine, dipentylamine, dihexylamine, diheptylamine, dioctylamine, dicyclohexylamine, dicyclohexylmethylamine, 2,6-lutidine, 2,2,4,4-tetramethylpiperidine, and 2,2,4,4-tetramethylpiperidone are particularly preferred.

From the viewpoint of the storage stability of the composition containing polymetalloxane (a) and an organic solvent (b), it is preferable that the above-mentioned catalyst is not contained in the polymetalloxane solution after hydrolysis, partial condensation, and polymerization. Thus, the catalyst is removed as necessary. There is no particular limitation on the method of removing the catalyst, and at least one of washing with water and a treatment with an ion exchange resin is preferred from the viewpoint of easy operation and removability. Washing with water is a removing method in which a polymetalloxane solution is diluted with an appropriate hydrophobic solvent and washed several times with water, and then the obtained organic layer is concentrated by an evaporator or the like. The treatment with an ion exchange resin is a removing method in which a polymetalloxane solution is brought into contact with an appropriate ion exchange resin.

### (Organic Solvent (b))

As described above, the composition to be subjected to the method of producing a metal oxide fiber according to Embodiment 1 of the present invention contains polymetalloxane (a) and an organic solvent (b). The composition can contain an organic solvent (b) to be adjusted into an arbitrary viscosity. This allows the composition to have both spinnability and fluidity.

As such an organic solvent (b), the solvent contained in the polymetalloxane solution obtained in synthesis of polymetalloxane (a) can be used. Alternatively, the organic solvent (b) may be added to the polymetalloxane solution.

The organic solvent (b) is not particularly limited and is preferably the same solvent as that used in the synthesis of polymetalloxane (a). More preferably, the organic solvent (b) is an aprotic polar solvent. Use of an aprotic polar solvent as the organic solvent (b) results in an interaction between polymetalloxane (a) and the organic solvent (b), which can increase the viscosity of the composition containing them. This allows for easy production of a thread-like product from the composition in the spinning step described later.

Specific examples of the aprotic polar solvent include acetone, tetrahydrofuran, ethyl acetate, dimethoxyethane, N,N-dimethylformamide, dimethylacetamide (DMAc, 165°C), dipropylene glycol dimethyl ether, tetramethylurea, diethylene glycol ethyl methyl ether, dimethyl sulfoxide, N-methylpyrrolidone, γ-butyrolactone, 1,3-dimethyl-2-imidazolidinone, propylene carbonate, and N,N'-dimethyl propyleneurea.

### (Other Components in Composition)

In addition to polymetalloxane (a) and the organic solvent (b) as described above, the composition to be subjected to the method of producing a metal oxide fiber according to Embodiment 1 of the present invention may contains other components. Examples of the other components include a surfactant, a crosslinking agent, and a crosslinking accelerator.

Preferably, a surfactant is used to control the drying rate of the organic solvent (b) during the spinning step. The surfactant may remain in a thread-like product obtained in the spinning step, or may remain in a metal oxide fiber obtained by firing the thread-like product.

There is no particular limitation on the type of the surfactant. Examples of the surfactant that can be used include fluorine-based surfactants such as "MEGAFAC (registered trademark)" F142D, MEGAFAC F172, MEGAFAC F173, MEGAFAC F183, MEGAFAC F444, MEGAFAC F445, MEGAFAC F470, MEGAFAC F475, and MEGAFAC F477 (all of which are manufactured by DIC CORPORATION) and NBX-15, FTX-218, and DFX-18 (manufactured by Neos Corporation); silicone-based surfactants such as BYK-333, BYK-301, BYK-331, BYK-345, and BYK-307 (manufactured by BYK-Chemie Japan); polyalkylene oxide-based surfactants; and poly(meth)acrylate-based surfactants. Two or more types of these surfactants may be used.

The content of the surfactant in the composition is preferably 0.001 parts by weight or more and 10 parts by weight or less, and more preferably 0.01 parts by weight or more and 1 part by weight or less, based on 100 parts by weight of polymetalloxane (a).

The crosslinking agent and the crosslinking accelerator are preferably used for improving the strength of the metal oxide fiber. There is no particular limitation on the type of the crosslinking agent and the crosslinking accelerator. Examples of the crosslinking agent and the crosslinking accelerator that can be used include mono-s-butoxyaluminum diisopropylate, aluminum-s-butyrate, ethyl acetoacetate aluminum diisopropylate, aluminum tris(ethyl acetate), alkylacetoaluminum diisopropylate, aluminum monoacetylacetonatebis(ethylacetoacetate), aluminum tris(acetylacetonate), zirconium tris(acetylacetate), zirconium tris(ethylacetoacetate), titanium tris(acetylacetate), and titanium tris(ethylacetoacetate).

The total content of the crosslinking agent and the crosslinking accelerator in the composition is preferably 0.1 parts by weight or more and 50 parts by weight or less, and more preferably 1 part by weight or more and 20 parts by weight or less, based on 100 parts by weight of polymetalloxane (a). The crosslinking agent and the crosslinking accelerator may be used alone or both used in combination.

In the present invention, the lower limit of the viscosity of the composition at 25°C is preferably 10 P or more, more preferably 20 P or more, still more preferably 100 P or more, even still more preferably 500 P or more, yet even still more preferably 800 P or more. The upper limit of the viscosity of the composition at 25°C is preferably 50,000 P or less, more preferably 20,000 P or less, still more preferably 10,000 P or less, even still more preferably 5,000 P or less. When the viscosity of the composition is within the above-described range, both spinnability and fluidity that are derived from high-molecular weight polymetalloxane can be obtained. Thus, the composition has good processability into a thread-like product in the spinning step described later. The viscosity of the composition can be obtained through measurement using a Brookfield viscometer at an arbitrary rotation speed with the temperature of the composition set to 25°C.

Preferably, the composition to be subjected to the method of producing a metal oxide fiber according to Embodiment 1 of the present invention contains an organic polymer. The organic polymer refers to a polymer containing a carbon atom in its backbone. Specific examples of the organic polymer include polyethylene glycol, polypropylene glycol, polyethylene oxide, polypropylene oxide, polyvinylpyrrolidone, polyvinyl alcohol, cellulose, and acrylic resin.

The content of the organic polymer in the composition is preferably 1% by weight or less, more preferably 0.5% by weight or less, based on the weight of polymetalloxane (a) contained in the composition. When the organic polymer is contained at the above-described concentration, occurrence of holes and cracks can be reduced in a metal oxide fiber to be obtained in a firing step in which a thread-like product obtained via spinning is fired as described later. This allows the metal oxide fiber to have improved strength.

Preferably, the composition to be subjected to the method of producing a metal oxide fiber according to Embodiment 1 of the present invention does not contain either an alkali metal or an alkaline earth metal. Inclusion of an alkali metal or an alkaline earth metal in the composition causes reduction of the degree of crosslinking in the firing step in which a thread-like product obtained via spinning is fired as described later. Thus, exclusion of either of an alkali metal or an alkaline earth metal leads to high degree of crosslinking, improving the strength of the obtained metal oxide fiber. Particularly preferably, the composition to be subjected to the method of producing a metal oxide fiber according to Embodiment 1 of the present invention does not contain any of Na, Mg, K, and Ca atoms.

Preferably, the composition to be subjected to the method of producing a metal oxide fiber according to Embodiment 1 of the present invention does not contain any of silicic acid, a silicate salt, silica gel, a silicate ester, boric acid, a borate salt, and a borate ester. Inclusion of the above-described compound in the composition causes the obtained metal oxide fiber to have lower melting point. Thus, exclusion of the above-described compound results in a metal oxide fiber having higher melting point, improving the heat resistance of the metal oxide fiber.

### <Method of Producing Metal Oxide Fiber>

In Embodiment 1 of the present invention, the method of producing a metal oxide fiber comprises a spinning step of spinning the above-mentioned composition to obtain a thread-like product; and a firing step of firing the thread-like product obtained in the spinning step at a temperature of 200°C or higher and 2,000°C or lower to obtain a metal oxide fiber.

### (Spinning Step)

In the spinning step, known methods can be used as the method of spinning the composition. Examples of the spinning method include dry spinning, wet spinning, dry-wet spinning, and electro-spinning methods.

The dry spinning method is a method comprising charging the composition, extruding it via a porous die to an atmosphere by applying a load, and evaporating the organic solvent to obtain a thread-like product. In this method, the composition may be heated after charging, thereby decreasing the viscosity during extrusion. The composition may be extruded to a heated atmosphere, thereby controlling the evaporation rate of the organic solvent. After the composition is extruded, the thread-like product may be stretched by rolling rollers or a high-speed airflow.

The wet spinning method is a method comprising extruding the composition via a porous die to a coagulation bath by applying a load, and removing the organic solvent to obtain a thread-like product. Preferably, the coagulation bath to be used is water or a polar solvent. The dry-wet spinning method is a method comprising extruding the composition to an atmosphere, then immersing it in a coagulation bath, and removing the organic solvent to obtain a thread-like product.

The electro-spinning method is a method comprising applying high voltage to a nozzle filled with the composition to make the droplet at the tip of the nozzle having increased electric charge, and allowing the droplets to repel each other and spread, thereby stretching the solution flow and achieving spinning. This method allows for obtaining a thread-like product having a small diameter. Thus, the electro-spinning method allows for obtaining a thread-like product having a small diameter from dozens of nanometers to few micrometers.

Among them, a dry spinning or electro-spinning method may be particularly preferably used as the spinning method in the spinning step in the present invention. Thus, the spinning step is preferably a step of spinning the composition by a dry spinning method or an electro-spinning method.

In the spinning step in the present invention, the obtained thread-like product may be optionally treated with drying, water vapor, hot water, or a combination thereof before being fired.

### (Firing Step)

In the firing step, the thread-like product obtained by spinning in the above-mentioned spinning step can be fired at a temperature of 200°C or higher and 2,000°C or lower to advance the crosslinking reaction and remove organic components such as an organic group, resulting in a metal oxide fiber having excellent strength. More preferably, the firing temperature in the firing step is 400°C or higher and 1,500°C or lower.

There is no particular limitation on the firing method. Examples of the firing method include firing methods in an air atmosphere, in inert atmospheres such as nitrogen and argon, and in a vacuum.

The firing step in the present invention may also comprise further firing the obtained metal oxide fiber in a reducing atmosphere such as hydrogen. In the firing step, the thread-like product or the metal oxide fiber may be fired with being exposed to a tension. Such a method can provide a continuous, dense metal oxide fiber having an average fiber diameter of 0.01 µm or more and 1,000 µm or less.

The average fiber diameter of the obtained metal oxide fiber can be determined according to the following method. For example, an adhesive tape is applied onto a pasteboard, and a single fiber to be measured for its fiber diameter is put horizontally on the adhesive tape, which is thereafter used as a single fiber test piece. The single fiber test piece is observed from the top surface with an electron microscope, and the width of the image is considered as the fiber diameter. The fiber diameter is the average of three measurements along the longitudinal direction. This operation was performed on 20 randomly selected single fibers and the resulting fiber diameters were averaged to obtain the average fiber diameter.

In the present invention, the average fiber diameter of the metal oxide fiber is preferably 0.01 µm or more and 1,000 µm or less, more preferably 0.10 µm or more and 200 µm or less. When the average fiber diameter is within the range described above, the metal oxide fiber can be obtained as a homogeneous fiber without crack. The lower limit of the average fiber diameter is further preferably 1 µm or more, still further preferably 3 µm or more. The upper limit of the average fiber diameter is further preferably 100 µm or less, still further preferably 70 µm or less.

### [Embodiment 2]

### (Metal Oxide Fiber)

In Embodiment 2 of the present invention, the metal oxide fiber has a characteristic composition as described below. Specifically, the metal oxide fiber according to Embodiment 2 comprises Si (silicon atom), and at least one metal atom selected from the group consisting of Al, Sc, Ti, V, Cr, Mn, Fe, Co, Ni, Cu, Zn, Ga, Ge, Y, Zr, Nb, Mo, Pd, Ag, In, Sn, Sb, Hf, Ta, W, and Bi (hereinafter may also referred to as "first characteristic"). In addition, the content of the SiO₂ component in metal oxides constituting the metal oxide fiber is 0.5% by weight or less (hereinafter may also referred to as "second characteristic").

For example, the metal oxide fiber according to Embodiment 2 is a fiber composed of a metal oxide including polymetalloxane (a). In Embodiment 2, polymetalloxane (a) has a repeating structure comprising Si (silicon atom), at least one metal atom selected from the group consisting of the above-described metal atoms, and an oxygen atom. An example of the structural unit of polymetalloxane (a) include the structural unit represented by general formula (2) described above.

The metal oxide fiber having the first and second characteristics as described above is a metal oxide fiber in which some metals constituting the crystalline or amorphous region in the metal oxide are replaced by Si. Such a metal oxide fiber has a disturbed molecular arrangement as compared with metal oxide fibers without Si and thus has good flexibility.

In Embodiment 2 of the present invention, the upper limit of the content of the SiO₂ component in metal oxides in the metal oxide fiber is 0.5% by weight or less, and preferably is 0.2% by weight or less. When the content of the SiO₂ component in the metal oxide fiber is within the above-described range, formation of sites with low melting point and thus low heat resistance, such as silica, is prevented, so that a metal oxide fiber with higher heat resistance can be obtained.

In the present invention, the content of the SiO₂ component in metal oxides constituting the metal oxide fiber according to Embodiment 2 is represented by the ratio of the SiO₂ component in the metal oxides. The ratio of the SiO₂ component refers to a ratio obtained by a wide-angle X-ray diffraction method (hereinafter, abbreviated as XRD).

The ratio of the SiO₂ component in the metal oxides by XRD by the following method. For example, a metal oxide fiber sample is placed on a silicon anti-reflection plate and irradiated with X-ray using an X-ray diffractometer. The diffraction pattern was obtained with the measurement range (2θ) being 10 to 80°, then compared with standard data to determine the presence or absence of a peak derived from the SiO₂ component. The absence of the peak means no SiO₂ component detected (not detected). When a peak derived from the SiO₂ component is found to be present, the ratio of the integral of the strongest peak derived from the component divided by the reference intensity ratio and the integral of the strongest peak derived from the metal oxide component divided by the reference intensity ratio shall be the ratio of the SiO₂ component in the metal oxide in the metal oxide fiber.

In Embodiment 2 of the present invention, the metal oxide fiber has the same composition as the metal oxide fiber produced by the production method according to Embodiment 1 described above, except that it has the first and second characteristics described above. Specifically, the metal oxide fiber according to the Embodiment 2 is the same as the metal oxide fiber according to Embodiment 1 with respect to the average fiber diameter, the type and percentage of metal atoms in the metal oxide, and the like. In particular, the metal atoms in the metal oxide in the metal oxide fiber according to Embodiment 2 preferably include two or more metal atoms selected from the group consisting of Al, Ti, Zr, and Sn. The method of producing a metal oxide fiber according to Embodiment 2 of the present invention is the same as Embodiment 1 described above except that polymetalloxane having a repeating structure comprising Si (silicon atom), at least one metal atom selected from the group consisting of the above-described metal atoms, and an oxygen atom is used as polymetalloxane (a).

### (Applications)

The metal oxide fiber obtained by the production method according to the present invention is a continuous and dense metal oxide fiber, and thus has characteristics such as high heat resistance, high strength, and surface activity. Thus, the metal oxide fiber can be used as a heat insulating material for electric furnaces, building materials, and the like, or as a heat dissipating material, taking advantage of the characteristics of the high heat resistant fiber. The metal oxide fiber can be used as a composite material such as fiber reinforced plastics (FRP), taking advantage of the characteristics of the high strength fiber. Further, the metal oxide fiber can be used as a material for aircraft engine turbines, and the like and for aerospace planes, taking advantage of the characteristics of the high heat resistance and high strength fiber. The metal oxide fiber mainly composed of titanium dioxide has a photocatalytic activity and thus can be used as a filter for purifying water and air.

### Examples

The present invention will be described more specifically with reference to Synthesis Examples and Examples, but the present invention is not limited to these Examples and the like.

In Synthesis Examples and Examples, the concentration of the solid content in a polymetalloxane solution was determined by the following method. Specifically, the concentration of the solid content in a polymetalloxane solution was determined by weighing 1.0 g of the polymetalloxane solution in an aluminum cup, heating the polymetalloxane solution at 250°C for 30 minutes using a hot plate to evaporate the liquid component, and weighing the solid content remaining in the aluminum cup after heating.

The viscosity was measured by the following method. Specifically, the viscosity of the sample was measured using a Brookfield viscometer with digital computing function (DV-II, manufactured by Ametek Brookfield, U.S.) at a rotation speed of 3 rpm, with the temperature of the sample set to 25°C. The desired viscosity was thus obtained.

Analysis by Fourier transform infrared spectroscopy (hereinafter abbreviated to FT-IR) was performed by the following method. First, two silicon wafers superposed one upon another were measured with a Fourier transform infrared spectrometer (FT 720, manufactured by Shimadzu Corporation) and the value was used as a baseline. Next, one drop of a metal compound or a solution thereof was dropped on a silicon wafer and sandwiched with another silicon wafer to prepare a measurement sample. An absorbance of the metal compound or the solution thereof was calculated from the difference between the absorbance of the measurement sample and the absorbance of the baseline and the absorption peak was read.

The weight average molecular weight (Mw) was determined by the following method. Specifically, lithium chloride was dissolved in N-methyl-2-pyrrolidone (hereinafter abbreviated as NMP) to prepare a 0.02 mol/dm³ solution of lithium chloride in NMP as an eluent. A polymetalloxane was dissolved in the eluent to the concentration of 0.2% by weight to obtain a sample solution. The eluent was loaded into a porous gel column (each one of TSK gel α-M, α-3000, manufactured by Tosoh Corporation) at a flow rate of 0.5 mL/min, and 0.2 mL of the sample solution was injected into the column. The column eluate was detected with a differential refractive index detector (Model RI-201, manufactured by Showa Denko K.K.) and the elution time was analyzed to determine the weight average molecular weight (Mw).

### (Synthesis Example 1)

A method of synthesizing a polymetalloxane (T-1) solution of Synthesis Example 1 will be described. In this synthesis method, 31.4 g (0.10 mol) of triisopropoxy(trimethylsiloxy)titanium and 15.8 g of NMP as a solvent were mixed to obtain a solution 1. In addition, 5.4 g (0.30 mol) of water, 50.0 g of isopropyl alcohol as a solvent for diluting water, and 1.9 g (0.01 mol) of tributylamine as a polymerization catalyst were mixed to obtain a solution 2. Hereinafter, isopropyl alcohol is abbreviated as IPA

The entire amount of the solution 1 was charged in a 500-mL three-necked flask, and the three-necked flask was immersed in an oil bath at 40°C with stirring for 30 minutes. Thereafter, for the purpose of hydrolysis, the entire amount of the solution 2 was charged in a dropping funnel and added to the three-necked flask over 1 hour. During the addition of the solution 2, no precipitation occurred in the solution in the three-necked flask, and the solution was a uniform, colorless and transparent solution. After the addition of the solution 2, the mixture was stirred for additional 1 hour, which resulted in production of a metal compound containing a hydroxyl group. Thereafter, for the purpose of polycondensation, the oil bath was heated to 140°C over 30 minutes. One hour after starting of temperature rise, the internal temperature of the solution reached 100°C, and the solution was heated with stirring for 2 hours. The internal temperature of the solution during the stirring was 100 to 130°C. During the reaction, IPA and water were distilled. During the heating with stirring, no precipitation occurred in the solution in the three-necked flask, and the solution was a uniform and transparent solution.

After completion of the heating, the solution in the three-necked flask was cooled to room temperature, and the obtained solution was used as a polymetalloxane (T-1) solution. The appearance of the polymetalloxane (T-1) solution was pale yellow transparent.

The solid content concentration of the polymetalloxane (T-1) solution was 45.7%, while the viscosity of the solution was 3,500 P. Analysis of the polymetalloxane (T-1) solution by FT-IR revealed an absorption peak of Ti-O-Si (958 cm⁻¹). These results demonstrated that polymetalloxane (T-1) in the polymetalloxane (T-1) solution was polymetalloxane having a trimethylsiloxy group. The weight average molecular weight (Mw) of polymetalloxane (T-1) was 400,000 in terms of polystyrene.

### (Synthesis Example 2)

A method of synthesizing a polymetalloxane (T-2) solution of Synthesis Example 2 will be described. This synthesis method was performed in the same manner as in Synthesis Example 1 except that instead of 15.8 g of NMP as a solvent in Synthesis Example 1, 15.8 g of γ-butyrolactone was mixed as a solvent. Hereinafter, γ-butyrolactone is abbreviated as GBL.

A solution obtained by the synthesis method of Synthesis Example 2 was considered as a polymetalloxane (T-2) solution. The appearance of the polymetalloxane (T-2) solution was colorless and transparent. The solid content concentration of the polymetalloxane (T-2) solution was 44.5%, while the viscosity of the solution was 6,000 P. Analysis of the polymetalloxane (T-2) solution by FT-IR revealed an absorption peak of Ti-O-Si (958 cm⁻¹). These results demonstrated that polymetalloxane (T-2) in the polymetalloxane (T-2) solution was polymetalloxane having a trimethylsiloxy group. The weight average molecular weight (Mw) of the polymetalloxane (T-2) was 49,000 in terms of polystyrene.

### (Synthesis Example 3)

A method of synthesizing a polymetalloxane (T-3) solution of Synthesis Example 3 will be described. This synthesis method was performed in the same manner as in Synthesis Example 1 except that instead of 1.9 g of tributylamine as a polymerization catalyst in Synthesis Example 1, 2.0 g (0.01 mol) of dicyclohexylmethylamine was mixed as a polymerization catalyst.

A solution obtained by the synthesis method of Synthesis Example 3 was considered as a polymetalloxane (T-3) solution. The appearance of the polymetalloxane (T-3) solution was pale yellow transparent. The solid content concentration of the polymetalloxane (T-3) solution was 46.8%, while the viscosity of the solution was 4,500 P. Analysis of the polymetalloxane (T-3) solution by FT-IR revealed an absorption peak of Ti-O-Si (958 cm⁻¹). These results demonstrated that polymetalloxane (T-3) in the polymetalloxane (T-3) solution was polymetalloxane having a trimethylsiloxy group. The weight average molecular weight (Mw) of the polymetalloxane (T-3) was 520,000 in terms of polystyrene.

### (Synthesis Example 4)

A method of synthesizing a polymetalloxane (T-4) solution of Synthesis Example 4 will be described. In this synthesis method, 15.7 g (0.05 mol) of triisopropoxy(trimethylsiloxy)titanium, 17.0 g (0.05 mol) of tetrabutoxytitanium, and 16.4 g of NMP as a solvent were mixed to obtain a solution 1. In addition, 5.4 g (0.30 mol) of water, 50.0 g of IPA as a solvent for diluting water, and 1.9 g (0.01 mol) of tributylamine as a polymerization catalyst were mixed to obtain a solution 2.

In the synthesis method of Synthesis Example 4, hydrolysis and polycondensation were performed in the same manner as in Synthesis Example 1. During the reaction, IPA, butanol and water were distilled. During the heating with stirring, no precipitation occurred in the solution in the three-necked flask, and the solution was a uniform and transparent solution.

After completion of the heating, the solution in the three-necked flask was cooled to room temperature, and the obtained solution was used as a polymetalloxane (T-4) solution. The appearance of the polymetalloxane (T-4) solution was pale yellow transparent.

The solid content concentration of the polymetalloxane (T-4) solution was 45.0%, while the viscosity of the solution was 4,000 P. Analysis of the polymetalloxane (T-4) solution by FT-IR revealed an absorption peak of Ti-O-Si (958 cm⁻¹). These results demonstrated that polymetalloxane (T-4) in the polymetalloxane (T-4) solution was polymetalloxane having a trimethylsiloxy group. The weight average molecular weight (Mw) of the polymetalloxane (T-4) was 450,000 in terms of polystyrene.

### (Synthesis Example 5)

A method of synthesizing a polymetalloxane (Z-1) solution of Synthesis Example 5 will be described. In this synthesis method, 35.4 g (0.10 mol) of tripropoxy(trimethylsiloxy)zirconium and 17.5 g of NMP as a solvent were mixed to obtain a solution 1. In addition, 5.4 g (0.30 mol) of water, 50.0 g of IPA as a solvent for diluting water, and 1.9 g (0.01 mol) of tributylamine as a polymerization catalyst were mixed to obtain a solution 2.

In the synthesis method of Synthesis Example 5, hydrolysis and polycondensation were performed in the same manner as in Synthesis Example 1. During the reaction, IPA, propanol, and water were distilled. During the heating with stirring, no precipitation occurred in the solution in the three-necked flask, and the solution was a uniform and transparent solution.

A solution obtained by the synthesis method of Synthesis Example 5 was considered as a polymetalloxane (Z-1) solution. The appearance of the obtained polymetalloxane (Z-1) solution was colorless and transparent. The solid content concentration of the polymetalloxane (Z-1) solution was 43.1%, while the viscosity of the solution was 7,500 P. Analysis of the polymetalloxane (Z-1) solution by FT-IR revealed an absorption peak of Zr-O-Si (968 cm⁻¹). These results demonstrated that polymetalloxane (Z-1) in the polymetalloxane (Z-1) solution was polymetalloxane having a trimethylsiloxy group. The weight average molecular weight (Mw) of the polymetalloxane (Z-1) was 900,000 in terms of polystyrene.

### (Synthesis Example 6)

A method of synthesizing a polymetalloxane (A-1) solution of Synthesis Example 6 will be described. In this synthesis method, 24.6 g (0.10 mol) of di-s-butoxy(trimethylsiloxy)aluminum and 12.1 g of NMP as a solvent were mixed to obtain a solution 1. In addition, 5.4 g (0.30 mol) of water, 50.0 g of IPA as a solvent for diluting water, and 1.9 g (0.01 mol) of tributylamine as a polymerization catalyst were mixed to obtain a solution 2.

In the synthesis method of Synthesis Example 6, hydrolysis and polycondensation were performed in the same manner as in Synthesis Example 1. During the reaction, IPA, propanol, and water were distilled. During the heating with stirring, no precipitation occurred in the solution in the three-necked flask, and the solution was a uniform and transparent solution.

A solution obtained by the synthesis method of Synthesis Example 6 was considered as a polymetalloxane (A-1) solution. The appearance of the obtained polymetalloxane (A-1) solution was colorless and transparent. The solid content concentration of the polymetalloxane (A-1) solution was 42.1%, while the viscosity of the solution was 2,000 P. Analysis of the polymetalloxane (A-1) solution by FT-IR revealed an absorption peak of Al-O-Si (780 cm⁻¹). These results demonstrated that polymetalloxane (A-1) in the polymetalloxane (A-1) solution was polymetalloxane having a trimethylsiloxy group. The weight average molecular weight (Mw) of the polymetalloxane (A-1) was 190,000 in terms of polystyrene.

### (Synthesis Example 7)

A method of synthesizing a polymetalloxane (TZ-1) solution of Synthesis Example 7 will be described. In this synthesis method, 15.7 g (0.05 mol) of triisopropoxy(trimethylsiloxy)titanium, 17.7 g (0.05 mol) of tripropoxy(trimethylsiloxy)zirconium, and 16.6 g of NMP as a solvent were mixed to obtain a solution 1. In addition, 5.4 g (0.30 mol) of water, 50.0 g of IPA as a solvent for diluting water, and 1.9 g (0.01 mol) of tributylamine as a polymerization catalyst were mixed to obtain a solution 2.

In the synthesis method of Synthesis Example 7, hydrolysis and polycondensation were performed in the same manner as in Synthesis Example 1. During the reaction, IPA, propanol, and water were distilled. During the heating with stirring, no precipitation occurred in the solution in the three-necked flask, and the solution was a uniform and transparent solution.

A solution obtained by the synthesis method of Synthesis Example 7 was considered as a polymetalloxane (TZ-1) solution. The appearance of the obtained polymetalloxane (TZ-1) solution was pale yellow transparent. The solid content concentration of the polymetalloxane (TZ-1) solution was 44.4%, while the viscosity of the solution was 5,000 P. The polymetalloxane (TZ-1) solution was analyzed by FT-IR, showing an absorption peak of Ti-O-Si (958 cm⁻¹) and an absorption peak of Zr-O-Si (968 cm⁻¹). These results demonstrated that polymetalloxane (TZ-1) in the polymetalloxane (TZ-1) solution was polymetalloxane having a trimethylsiloxy group. The weight average molecular weight (Mw) of the polymetalloxane (TZ-1) was 600,000 in terms of polystyrene.

### (Synthesis Example 8)

A method of synthesizing a polymetalloxane (TA-1) solution of Synthesis Example 8 will be described. In this synthesis method, 15.7 g (0.05 mol) of triisopropoxy(trimethylsiloxy)titanium, 12.3 g (0.05 mol) of di-s-butoxy(trimethylsiloxy)aluminum, and 16.6 g of NMP as a solvent were mixed to obtain a solution 1. In addition, 5.4 g (0.30 mol) of water, 50.0 g of IPA as a solvent for diluting water, and 1.9 g (0.01 mol) of tributylamine as a polymerization catalyst were mixed to obtain a solution 2.

In the synthesis method of Synthesis Example 8, hydrolysis and polycondensation were performed in the same manner as in Synthesis Example 1. During the reaction, IPA, propanol, and water were distilled. During the heating with stirring, no precipitation occurred in the solution in the three-necked flask, and the solution was a uniform and transparent solution.

A solution obtained by the synthesis method of Synthesis Example 8 was considered as a polymetalloxane (TA-1) solution. The appearance of the obtained polymetalloxane (TA-1) solution was pale yellow transparent. The solid content concentration of the polymetalloxane (TA-1) solution was 46.2%, while the viscosity of the solution was 2,500 P. The polymetalloxane (TZ-1) solution was analyzed by FT-IR, showing an absorption peak of Ti-O-Si (958 cm⁻¹) and an absorption peak of Al-O-Si (780 cm⁻¹). These results demonstrated that polymetalloxane (TA-1) in the polymetalloxane (TA-1) solution was polymetalloxane having a trimethylsiloxy group. The weight average molecular weight (Mw) of the polymetalloxane (TA-1) was 280,000 in terms of polystyrene.

### (Synthesis Example 9)

A method of synthesizing a polymetalloxane (ZA-1) solution of Synthesis Example 9 will be described. In this synthesis method, 17.7 g (0.05 mol) of tripropoxy(trimethylsiloxy)zirconium, 12.3 g (0.05 mol) of di-s-butoxy(trimethylsiloxy)aluminum, and 16.6 g of NMP as a solvent were mixed to obtain a solution 1. In addition, 5.4 g (0.30 mol) of water, 50.0 g of IPA as a solvent for diluting water, and 1.9 g (0.01 mol) of tributylamine as a polymerization catalyst were mixed to obtain a solution 2.

In the synthesis method of Synthesis Example 9, hydrolysis and polycondensation were performed in the same manner as in Synthesis Example 1. During the reaction, IPA, propanol, s-butanol, and water were distilled. During the heating with stirring, no precipitation occurred in the solution in the three-necked flask, and the solution was a uniform and transparent solution.

A solution obtained by the synthesis method of Synthesis Example 9 was considered as a polymetalloxane (ZA-1) solution. The appearance of the obtained polymetalloxane (ZA-1) solution was pale yellow transparent. The solid content concentration of the polymetalloxane (ZA-1) solution was 44.5%, while the viscosity of the solution was 4,500 P. The polymetalloxane (ZA-1) solution was analyzed by FT-IR, showing an absorption peak of Zr-O-Si (968 cm⁻¹) and an absorption peak of Al-O-Si (780 cm⁻¹). These results demonstrated that polymetalloxane (ZA-1) in the polymetalloxane (ZA-1) solution was polymetalloxane having a trimethylsiloxy group. The weight average molecular weight (Mw) of the polymetalloxane (ZA-1) was 500,000 in terms of polystyrene.

Results from Synthesis Examples 1 to 9 described above are collectively shown in Table 1.

**Table 1**

| | | solution 1 | | | | | | solution 2 | | | physical properties of polymer | | |
|---|---|---|---|---|---|---|---|---|---|---|---|---|---|
| | | monomer 1 | | monomer 2 | | solvent | | water | solvent for diluting water | polymerization catalyst | | | |
| | | type | amount | type | amount | type | amount | | | | solid content concentr ation | viscosit y | weight average molecular weight |
| Synthesis Example 1 | polymetalloxane (T-1) solution | triisopropoxy (trimethylsiloxy) titanium | 31.4 g (0.10 mol) | - | - | NMP | 15.8 g | 5.4 g (0.30 mol) | IPA 50.0 g | tributylamine 1.9 g (0.01 mol) | 45.7% | 3500 P | 400,000 |
| Synthesis Example 2 | polymetalloxane (T-2) solution | triisopropoxy (trimethylsiloxy) titanium | 31.4 g (0.10 mol) | - | - | GBL | 15.8 g | 5.4 g (0.30 mol) | IPA 50.0 g | tributylamine 1.9 g (0.01 mol) | 44.5% | 6000 P | 49,000 |
| Synthesis Example 3 | polymetalloxane (T-3) solution | triisopropoxy (trimethylsiloxy) titanium | 31.4 g (0.10 mol) | - | | NMP | 15.8 g | 5.4 g (0.30 mol) | IPA 50.0 g | dicyclohexyl methylamine 2.0 g (0.01 mol) | 46.8% | 4500 P | 520,000 |
| Synthesis Example 4 | polymetalloxane (T-4) solution | triisopropoxy (trimethylsiloxy) titanium | 15 . 7 g (0.05 mol) | tetrabutox ytitanium | 17.0 g (0.05 mol) | NMP | 16.4 g | 5.4 g (0.30 mol) | IPA 50.0 g | tributy lamine 1.9 g (0.01 mol) | 45.0% | 4000 P | 450,000 |
| Synthesis Example 5 | polymetalloxane (Z-1) solution | tripropoxy (trimethylsiloxy) zirconium | 35.4 g (0.10 mol) | - | - | NMP | 17.5 g | 5.4 g (0.30 mol) | IPA 50.0 g | tributylamine 1.9 g (0.01 mol) | 43.1% | 7500 P | 900,000 |

| Synthesis Example 6 | polymetalloxane (A-1) solution | di-s-butoxy (trimethylsiloxy) aluminum | 24.6 g (0.10 mol) | - | - | NMP | 12.1 g | 3.6 g (0.20 mol) | IPA 50.0 g | tributylamine 1.9 g (0.01 mol) | 42.1% | 2000 P | 190,000 |
|---|---|---|---|---|---|---|---|---|---|---|---|---|---|
| Synthesis Example 7 | polymetalloxane (TZ-1) solution | triisopropoxy (trimethylsiloxy) titanium | 15.7 g (0.05 mol) | triisopropo xy(trimeth ylsiloxy)zi rconium | 17.7 g (0.05 mol) | NMP | 16.6 g | 5.4 g (0.30 mol) | IPA 50.0 g | tributylamine 1.9 g (0.01 mol) | 44.4% | 5000 P | 600,000 |
| Synthesis Example 8 | polymetalloxane (TA-1) solution | triisopropoxy (trimethylsiloxy) titanium | 15.7 g (0.05 mol) | di-s-butoxy(tri methylsilo xy)alumin um | 12.3 g (0.05 mol) | NMP | 13.9 g | 5.4 g (0.30 mol) | IPA 50.0 g | tributylamine 1.9 g (0.01 mol) | 46.2% | 2500 P | 280,000 |
| Synthesis Example 9 | polymetalloxane (ZA-1) solution | tripropoxy (trimethylsiloxy) zirconium | 17.7 g (0.05 mol) | di-s-butoxy(tri methylsilo xy)alumin um | 12.3 g (0.05 mol) | NMP | 14.5 g | 5.4 g (0.30 mol) | IPA 50.0 g | tributylamine 1.9 g (0.01 mol) | 44.5% | 4500 P | 500,000 |

In Examples and Comparative Examples below, the average fiber diameters of thread-like products and metal oxide fibers were measured according to the following method. First, an adhesive tape (carbon double-stick tape for SEM (aluminum base), manufactured by Nisshin EM Co., Ltd.) was applied onto a pasteboard, and the thread-like product or a metal oxide fiber to be measured for its fiber diameter was put horizontally on the adhesive tape, which was thereafter used as a single fiber test piece. The single fiber test piece was observed from the top surface with an electron microscope, and the width of the image was considered as the fiber diameter. The fiber diameter was the average of three measurements along the longitudinal direction. This operation was performed on 20 randomly selected thread-like products or metal oxide fibers and the resulting fiber diameters were averaged to obtain the average fiber diameter.

The tensile strength was measured according to the following method. Specifically, a sample was pulled with a TENSILON universal tensile testing machine (RTM-100, manufactured by ORIENTEC) at a measurement length of 25 mm and a pulling rate of 1 mm/min. The strength at which the sample (fiber) was broken was considered as the tensile strength. It is noted that the measurement of the tensile strength was the average value of the tensile strength values of randomly selected 20 samples.

Analysis of organic polymers in the composition was performed as described below. Specifically, in the same manner as the weight average molecular weight (Mw) as described above, 0.02 mol/dm³ solution of lithium chloride in NMP was used as an eluent to dissolve the composition to a solid content concentration of 0.2% by weight, thereby obtaining a sample solution. The eluent was loaded into a porous gel column (each one of TSK gel α-M, α-3000, manufactured by Tosoh Corporation) at a flow rate of 0.5 mL/min, and 0.2 mL of the sample solution was injected into the column. The column eluate was captured at an elution time of 20 min (equivalent to Mw. 280,000), 25 min (equivalent to Mw. 12,000), and 30 min (equivalent to Mw. 1,400), and analyzed by FT-IR.

The contents of alkali metals and alkaline earth metals in the composition were measured as described below. Specifically, the composition was weighed into a platinum crucible and sequentially incinerated with a burner and an electric furnace. The incinerated product was decomposed by heating with hydrofluoric acid, and made into a constant volume. A quantitative analysis for Na, Mg, K, and Ca in the obtained constant volume solution was performed using Agilent 8800 (an ICP mass spectrometer, manufactured by Agilent Technologies, Inc.).

The contents of silicic acid, a silicate salt, silica gel, a silicate ester, boric acid, a borate salt, and a borate ester in the composition were measured as described below. Specifically, the composition was charged in a 5 mm ϕ glass tube, and subjected to ²⁹Si NMR measurement and ¹¹B NMR measurement using ECA600 (trade name, manufactured by JEOL RESONANCE Inc.) to determine the presence or absence of peaks derived from the target substances.

### (Example 1)

In Example 1, 1.25 g of NMP was added to 8.75 g of the polymetalloxane (T-1) solution to obtain a composition having a solid content concentration of 40.0%. The viscosity of the composition was 2,000 P.

The composition of Example 1 was analyzed for organic polymers, and an absorption peak of Ti-O-Ti (451 cm⁻¹) was found in the eluates at any elution time. These results demonstrated that the eluate was polymetalloxane, and no organic polymer was detected.

The composition of Example 1 was analyzed for the contents of alkali metals and alkaline earth metals, demonstrating that the contents of Na, Mg, K, and Ca were all less than 1 µg/g.

The composition of Example 1 was analyzed for the contents of silicic acid, silicate salts, silica gel, silicate esters, boric acid, borate salts, and borate esters, demonstrating that no peak derived from the compound was observed. These results demonstrated that the composition of Example 1 did not contain the above-described compounds (not detected).

Next, the composition of Example 1 was loaded into a 10-mL syringe for dispenser (manufactured by Musashi Engineering, Inc.). The syringe was equipped with a plastic needle for dispenser (inner diameter: 0.20 mm, manufactured by Musashi Engineering, Inc.) as a die and an adapter tube (manufactured by Musashi Engineering, Inc.). The adapter tube and a compressed air line were connected, then the composition was extruded into an air atmosphere at 25°C at a pressure of 0.4 MPa to obtain a thread-like product. The average fiber diameter of the thread-like product was 60 µm.

The obtained thread-like product was dried at 25°C for 24 hours and then fired at 600°C for 60 minutes at a temperature rising rate of 10°C/min using an electric muffle furnace (FUW263PA, manufactured by ADVANTEC) under an air atmosphere to obtain a metal oxide fiber. The average fiber diameter of the metal oxide fiber was 40 µm. The tensile strength of the metal oxide fiber was 1.2 GPa. The composition and measurement results of the composition of Example 1 are collectively shown in Table 2 below.

### (Examples 2 to 11)

Examples 2 to 11, thread-like products were obtained from the compositions shown in Table 2 in the same manner as in Example 1. Next, the thread-like product was fired at a firing temperature shown in Table 2 in the same manner as in Example 1 to obtain a metal oxide fiber.

In Examples 2 to 11, the viscosity of the composition, the average fiber diameter of the thread-like product, the average fiber diameter of the metal oxide fiber, and the tensile strength of the metal oxide were measured. The measurement results from Examples 2 to 11 are collectively shown in Table 2.

**Table 2**

| | composition | | | | | | analysis for organic polymer | content of alkali and alkali earth metals | content of silicates and borates | thread - like product | firing temperat ure | metal oxide fiber | |
|---|---|---|---|---|---|---|---|---|---|---|---|---|---|
| | polymetalloxane | | organic solvent | | solid content concentration | viscosity of compositi on | | | | average fiber diameter | | average fiber diameter | tensile strength |
| | type | amount | type | amount | | | | | | | | | |
| Example 1 | polymetalloxane (T-1) solution | 8.75 g | NMP | 1.25 g | 40% | 2000 P | not detected | <1 µg/g | not detected | 60 µm | 600°C | 40µm | 1.2 GPa |
| Example 2 | polymetalloxane (T-1) solution | 8.75 g | NMP | 1.25 g | 40% | 2000 P | not detected | <1 µg/g | not detected | 60 µm m | 1000°C | 35µm | 1.4 GPa |
| Example 3 | polymetalloxane (T-2) solution | 8.99 g | GBL | 1.01 g | 40% | 4000 P | not detected | <1 µg/g | not detected | 100 µm | 1000°C | 65µm | 1.0 GPa |
| Example 4 | polymetalloxane (T-3) solution | 8.55 g | NMP | 1.45 g | 40% | 3000 P | not detected | <1 µg/g | not detected | 80 µm | 1000°C | 50µm | 2.0 GPa |
| Example 5 | polymetalloxane (T-4) solution | 8.89 g | NMP | 1.11 g | 40% | 2500 P | not detected | <1 µg/g | not detected | 70 µm | 1000°C | 45µm | 1.0 GPa |
| Example 6 | polymetalloxane (Z-1) solution | 9.28 g | NMP | 0.72 g | 40% | 3000 P | not detected | <1 µg/g | not detected | 80 µm | 1000°C | 50µm | 4.0 GPa |
| Example 7 | polymetalloxane (A-1) solution | 9.50 g | NMP | 0.50 g | 40% | 1000 P | not detected | <1 µg/g | not detected | 40 µm | 1000°C | 25µm | 3.0 GPa |
| Example 8 | polymetalloxane (TZ-1) solution | 9.00 g | NMP | 0.99 g | 40% | 3500 P | not detected | <1 µg/g | not detected | 90 µm | 1000°C | 60µm | 4.0 GPa |
| Example 9 | polymetalloxane (TA-1) solution | 8.66 g | NMP | 1.34 g | 40% | 1200 P | not detected | <1 µg/g | not detected | 40 µm | 1000°C | 25µm | 3.0 GPa |
| Example 10 | polymetalloxane (ZA-1) solution | 8.99 g | NMP | 1.01 g | 40% | 3000 P | not detected | <1 µg/g | not detected | 80 µm | 1000°C | 50µm | 5.0 GPa |
| Example 11 | polymetalloxane (ZA-1) solution | 8.99 g | NMP | 1.01 g | 40% | 3000 P | not detected | <1 µg/g | not detected | 80 µm | 1500°C | 40µm | 5.0 GPa |

### (Comparative Example 1)

In Comparative Example 1, using B-10 (trade name, manufactured by NIPPON SODA CO., LTD., butoxy titanium oligomer, weight average molecular weight: 2200) as polymetalloxane, 6.0 g of NMP was added to 4.00 g of B-10 to obtain a composition having a solid content concentration of 40.0%. The viscosity of the composition was 0.1 P. In Comparative Example 1, the composition was extruded from a needle in the same manner as in Example 1 to form a liquid drop, failing to provide a thread-like product.

### (Comparative Example 2)

In Comparative Example 2, B-10 as polymetalloxane without addition of an organic solvent gave a composition having a solid content concentration of 100.0%. The viscosity of the composition was 20 P. In Comparative Example 2, the composition was extruded from a needle in the same manner as in Example 1 to form a liquid drop, failing to provide a thread-like product.

### (Example 12)

In Example 12, the elementary composition of the metal oxide fiber prepared in Example 1 described above was quantified by X-ray photoelectron spectroscopy (hereinafter, abbreviated as XPS). The elementary composition analysis by XPS was performed according to the following method. Specifically, an X-ray photoelectron spectrometer (Quantera SXM, manufactured by UL VAC-PHI, INCORPORATED) was used to irradiate the sample with an excitation x-ray (monochromatic Al Kα_{1,2} ray (1486.6 eV)) with the X-ray diameter set to 200 µm. Photoelectrons emitted from the surface when the photoelectron emission angle was set to 45° were detected with an analyzer. Based on the peak position, the peak shape, and the peak area ratio in the detected photoelectron spectrum, the elementary composition was determined.

The elementary composition of the metal oxide fiber prepared in Example 1 is shown in Table 3 below. In Example 12, the structure of the metal oxide fiber prepared in Example 1 was analyzed by a wide-angle X-ray diffraction method (hereinafter, abbreviated as XRD). The structure analysis by XRD was performed according to the following method. Specifically, the diffraction pattern was obtained using an X-ray diffractometer (D8 ADVANCE, manufactured by Bruker AXS GmbH) and a measurement range (2θ) of 10 to 80°, followed by comparison with standard data and identification. The results of the structure analysis of the metal oxide fiber prepared in Example 1 is shown in Table 3 below.

### (Examples 13 to 22)

In Examples 13 to 22, the metal oxide fibers prepared in Examples 2 to 11 as shown in Table 2 were subjected to an elementary composition analysis by XPS and a structure analysis by XRD in the same manner as in Example 12. Analysis results from Examples 13 to 22 are shown in Table 3.

**Table 3**

| | metal oxide fiber | elementary composition (XPS, atomic%) | | | | | | | structural analysis (XRD) | |
|---|---|---|---|---|---|---|---|---|---|---|
| | | C | N | O | Si | Ti | Zr | Al | detected crystalline component | SiO₂ component |
| Example 12 | Example 1 | 11.6 | 1.9 | 60.8 | 3.2 | 22.5 | 0.0 | 0.0 | anatase titanium dioxide | not detected (0.1 wt% or less) |
| Example 13 | Example 2 | 8.6 | 1.1 | 61.7 | 2.0 | 26.7 | 0.0 | 0.0 | anatase titanium dioxide rutile titanium dioxide | not detected (0.1 wt% or less) |
| Example 14 | Example 3 | 8.0 | 0.8 | 62.1 | 2.1 | 27.0 | 0.0 | 0.0 | anatase titanium dioxide rutile titanium dioxide | not detected (0.1 wt% or less) |
| Example 15 | Example 4 | 8.2 | 1.3 | 61.5 | 2.3 | 26.7 | 0.0 | 0.0 | anatase titanium dioxide rutile titanium dioxide | not detected (0.1 wt% or less) |
| Example 16 | Example 5 | 8.6 | 1.1 | 61.7 | 1.0 | 27.6 | 0.0 | 0.0 | anatase titanium dioxide rutile titanium dioxide | not detected (0.1 wt% or less) |
| Example 17 | Example 6 | 6.5 | 0.6 | 62.2 | 2.3 | 0.0 | 28.4 | 0.0 | cubic zirconium dioxide | not detected (0.1 wt% or less) |
| Example 18 | Example 7 | 5.6 | 0.2 | 63.0 | 0.7 | 0.0 | 0.0 | 30.4 | γ-aluminum dioxide | not detected (0.1 wt% or less) |
| Example 19 | Example 8 | 6.4 | 1.7 | 62.1 | 2.2 | 13.8 | 13.8 | 0.0 | anatase titanium dioxide cubic zirconium dioxide | not detected (0.1 wt% or less) |
| Example 20 | Example 9 | 7.1 | 1.3 | 61.2 | 1.4 | 14.5 | 0.0 | 14.5 | anatase titanium dioxide | not detected (0.1 wt% or less) |
| Example 21 | Example 10 | 6.5 | 0.4 | 62.2 | 1.5 | 0.0 | 14.7 | 14.7 | cubic zirconium dioxide | not detected (0.1 wt% or less) |
| Example 22 | Example 11 | 0.9 | 0.4 | 62.9 | 1.4 | 0.0 | 17.2 | 17.2 | monoclinic zirconium dioxide cubic zirconium dioxide α-aluminum dioxide | not detected (0.1 wt% or less) |

### Industrial Availability

Thus, the method of producing a metal oxide fiber and the metal oxide fiber according to the present invention are suitable for providing with ease a metal oxide fiber having characteristics such as high heat resistance, high strength, and surface activity.

## Claims

1. A method of producing a metal oxide fiber, comprising:
a spinning step of spinning a composition containing polymetalloxane and an organic solvent to obtain a thread-like product; and
a firing step of firing the thread-like product obtained in the spinning step at a temperature of 200°C or higher and 2,000°C or lower to obtain a metal oxide fiber;
wherein the polymetalloxane has a repeating structure composed of a metal atom selected from the group consisting of Al, Sc, Ti, V, Cr, Mn, Fe, Co, Ni, Cu, Zn, Ga, Ge, Y, Zr, Nb, Mo, Pd, Ag, In, Sn, Sb, Hf, Ta, W and Bi, and an oxygen atom;
wherein the weight average molecular weight of the polymetalloxane is 20,000 or more and 2,000,000 or less.

2. The method of producing a metal oxide fiber according to claim 1, wherein the viscosity of the composition at 25°C is 10 P or more and 50,000 P or less.

3. The method of producing a metal oxide fiber according to claim 1 or 2, wherein the average fiber diameter is 0.01 µm or more and 1,000 µm or less.

4. The method of producing a metal oxide fiber according to any one of claims 1 to 3,
wherein the composition contains an organic polymer; and
wherein the content of the organic polymer in the composition is 1% by weight or less relative to the weight of the polymetalloxane contained in the composition.

5. The method of producing a metal oxide fiber according to any one of claims 1 to 4, wherein the composition does not contain any of an alkali metal and an alkaline earth metal.

6. The method of producing a metal oxide fiber according to any one of claims 1 to 5, wherein the composition does not contain any of silicic acid, a silicate salt, silica gel, a silicate ester, boric acid, a borate salt, and a borate ester.

7. The method of producing a metal oxide fiber according to any one of claims 1 to 6, wherein the polymetalloxane has at least one of a structural unit represented by the following general formula (1) and a structural unit represented by the following general formula (2): 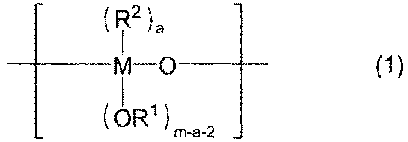 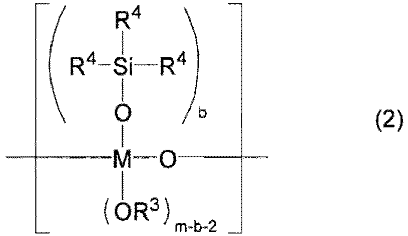 wherein in the general formula (1) and the general formula (2),
R¹ and R³ are arbitrarily selected from a hydrogen atom, an alkyl group having 1 to 12 carbon atoms, or a group having a metalloxane bond;
R² is arbitrarily selected from a hydroxy group, an alkyl group having 1 to 12 carbon atoms, an alicyclic alkyl group having 5 to 12 carbon atoms, an alkoxy group having 1 to 12 carbon atoms, an aromatic group having 6 to 30 carbon atoms, a phenoxy group having 6 to 30 carbon atoms, and a naphthoxy group having 10 to 30 carbon atoms;
when a plurality of R¹, R², and R³ exist, they are optionally the same or different;
R⁴ is arbitrarily selected from a hydroxy group, an alkyl group having 1 to 12 carbon atoms, an alicyclic alkyl group having 5 to 12 carbon atoms, an alkoxy group having 1 to 12 carbon atoms, an aromatic group having 6 to 30 carbon atoms, and a group having a siloxane bond;
M represents a metal atom selected from the group consisting of Al, Sc, Ti, V, Cr, Mn, Fe, Co, Ni, Cu, Zn, Ga, Ge, Y, Zr, Nb, Mo, Pd, Ag, In, Sn, Sb, Hf, Ta, W, and Bi;
m is an integer indicating the valence of the metal atom M;
a is an integer of 0 to (m-2); and
b is an integer of 1 to (m-2).

8. The method of producing a metal oxide fiber according to claim 7,
wherein the polymetalloxane has at least a structural unit represented by the general formula (1); and
wherein at least one of R² in the general formula (1) is a hydroxy group.

9. The method of producing a metal oxide fiber according to claim 7 or 8, wherein the polymetalloxane has at least a structural unit represented by the general formula (2).

10. The method of producing a metal oxide fiber according to any one of claims 7 to 9, wherein the metal atom M in the polymetalloxane comprises at least one metal atoms selected from the group consisting of Al, Ti, Zr, and Sn.

11. The method of producing a metal oxide fiber according to any one of claims 7 to 10,
wherein the metal atom M in the polymetalloxane comprises Ti; and
wherein the ratio of Ti in the entire metal atom M in the metal oxide fiber is in a range of 5 mol% or more and 100 mol% or less.

12. The method of producing a metal oxide fiber according to any one of claims 7 to 10,
wherein the metal atom M in the polymetalloxane comprises Zr; and
wherein the ratio of Zr in the entire metal atom M in the metal oxide fiber is in a range of 5 mol% or more and 100 mol% or less.

13. The method of producing a metal oxide fiber according to any one of claims 1 to 12, wherein the spinning step is a step of spinning the composition by a dry spinning method or an electro-spinning method.

14. A metal oxide fiber, comprising
Si, and
at least one metal atom selected from the group consisting of Al, Sc, Ti, V, Cr, Mn, Fe, Co, Ni, Cu, Zn, Ga, Ge, Y, Zr, Nb, Mo, Pd, Ag, In, Sn, Sb, Hf, Ta, W, and Bi;
wherein the content of the SiO₂ component in the metal oxide is 0.5% by weight or less.

15. The metal oxide fiber according to claim 14, wherein the average fiber diameter is 0.01 µm or more and 1,000 µm or less.

16. The metal oxide fiber according to claim 14 or 15, wherein the metal atom in the metal oxide comprises at least one metal atom selected from the group consisting of Al, Ti, Zr, and Sn.

17. The metal oxide fiber according to claim 14 or 15,
wherein the metal atom in the metal oxide comprises Ti; and
wherein the ratio of Ti in the entire contained metal atom is in a range of 5 mol% or more and 100 mol% or less.

18. The metal oxide fiber according to claim 14 or 15,
wherein the metal atom in the metal oxide comprises Zr; and
wherein the ratio of Zr in the entire contained metal atom is in a range of 5 mol% or more and 100 mol% or less.

19. The metal oxide fiber according to claim 14 or 15, wherein the metal atom in the metal oxide comprises two or more metal atoms selected from the group consisting of Al, Ti, Zr, and Sn.
